(19) Europäisches Patentamt
European Patent Office
Office européen des brevets

(11) **EP 2 582 971 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **11721245.6**

(22) Anmeldetag: **24.05.2011**

(51) Int Cl.:
***F03D 7/04*** (2006.01)

(86) Internationale Anmeldenummer:
**PCT/EP2011/002565**

(87) Internationale Veröffentlichungsnummer:
**WO 2011/157349 (22.12.2011 Gazette 2011/51)**

(54) **VERFAHREN UND VORRICHTUNG ZUR ERMITTLUNG EINES SCHÄTZWERTS FÜR ZUMINDEST EINE MESSGRÖSSE EINER WINDKRAFTANLAGE**

METHOD AND DEVICE FOR DETERMINING AN ESTIMATED VALUE FOR AT LEAST ONE MEASURED VARIABLE OF A WIND TURBINE

PROCÉDÉ ET DISPOSITIF DE DÉTERMINATION D'UNE VALEUR ESTIMÉE POUR AU MOINS UNE GRANDEUR DE MESURE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2010 DE 102010024251**

(43) Veröffentlichungstag der Anmeldung:
**24.04.2013 Patentblatt 2013/17**

(73) Patentinhaber: **Robert Bosch GmbH**
**70469 Stuttgart (DE)**

(72) Erfinder:
• **EITNER, Christian**
**80809 München (DE)**

• **HESS, Felix**
**71642 Ludwigsburg (DE)**
• **VOSS, Martin**
**70499 Stuttgart (DE)**
• **BUCHTALA, Boris**
**75417 Mühlacker (DE)**

(74) Vertreter: **Wiesmann, Stephan**
**Bosch Rexroth AG**
**DC/IPR**
**Zum Eisengießer 1**
**97816 Lohr am Main (DE)**

(56) Entgegenhaltungen:
**EP-A1- 0 008 584       EP-A2- 1 659 287**
**WO-A2-2008/119351    WO-A2-2009/026930**
**US-A1- 2003 151 259**

**Beschreibung**

Die vorliegende Erfindung bezieht sich auf ein Verfahren und eine Vorrichtung zur Ermittlung eines Schätzwerts für zumindest eine Messgröße einer Windkraftanlage gemäß den unabhängigen Ansprüchen.

Die Regelung moderner Windkraftanlagen im Nenndrehzahlbereich verfolgt das Ziel Überlasten zu vermeiden, welche sich vom Rotor auf den Antriebsstrang und das Turm-/Gondelsystem übertragen. Bisher wird dafür eine kollektive Pitchregelung (engl. Collective Pitch Control = CPC) aller Rotorblätter angewandt. Über eine Änderung des Pitchwinkels, der hier auch als Anstellwinkel bezeichnet wird, wird der aerodynamische Anströmwinkel verkleinert und somit eine Reduktion der für das Antriebsmoment verantwortlichen Auftriebskraft erreicht. Die Rotorblätter können auch als aerodynamische Bremsen verwendet werden indem sie in Fahnenstellung komplett in die Windanströmrichtung gestellt werden oder der Anströmwinkel so stark erhöht wird, dass die Strömung abreist (Stall).

In letzter Zeit wird verstärkt ein neuer Ansatz für die Regelung von beispielsweise Dreiflügel Windkraftanlagen untersucht, welcher zusätzlich zu dem kollektiven Pitchwinkel einen individuellen Pitchwinkel der einzelnen Rotorblätter berechnet. Die individuelle Pitchverstellung (engl. Individual Pitch Control = IPC) erlaubt eine Reduzierung der asymmetrischen Lasten, welche auf die Gondel über die Nabe übertragen werden. Hierzu werden die an den einzelnen Rotorblattwurzeln wirkenden Biegemomente gemessen und die für die Reduktion des Gier und Nickmomentes nötige individuelle Blattverstellung berechnet. Die aus der IPC- und CPC Regelung berechneten Pitchwinkel werden dann als Vorgabe an die Regler der entsprechenden Pitchaktuatoren gesendet. Das Dokument WO 2008 041066 A1 beschreibt eine solche Regelung, die gemessene Momente für eine Regelung der einzelnen Anstellwinkel der Blätter eines Windrotors einer Windkraftanlage als Regelgröße verwendet.

Fällt allerdings einer der Sensoren für die Biegemomente an den Blattwurzeln aus, erhält ein IPC Regler keine ausreichenden Daten mehr, die eine Optimierung der Anstellwinkel für jedes der Rotorblätter bei unterschiedlichen Luftanströmungen sicherstellen.

Die WO 2009/026930 A2 offenbart ein Verfahren zur Überwachung von mindestens einem Anpassungsmechanismus einer Windturbine, eine Windturbine und einen Windpark.

Die Ep 1 659 287 A2 offenbart eine Vorrichtung und ein Verfahren zur Funktionsprüfung einer Windkraftanalge.

Die WO 2008/119651 A2 offenbart eine Windturbine mit Pitchkontrolle, die ausgebildet ist,um Lebensdauer verkürzende Lasten von Komponenten derselben zu reduzieren.

Es ist die Aufgabe der vorliegenden Erfindung, einen Ansatz für eine erhöhte Sicherheit gegen einen Ausfall von Messwertgebern einer Windkraftanlage bereitzustellen.

Diese Aufgabe wird durch ein Verfahren und eine Vorrichtung gemäß den unabhängigen Ansprüchen gelöst.

Aufgrund der Notwendigkeit von Fail-Safe Mechanismen ist es wichtig, insbesondere für den Betrieb einer IPC-Regelung die Sicherheit des Regelalgorithmus auch bei einem etwaigen Sensorausfall zu gewährleisten. Der vorliegenden Erfindung liegt die Erkenntnis zu Grunde, dass bei einer IPC-Regelung im Falle eines Ausfalls der Sensorik auf einem Rotorblatt, die für die Coleman-Transformation nötigen Belastungsmessgrößen nicht mehr komplett zur Verfügung stehen. In diesem Zusammenhang ist es auch Aufgabe der Erfindung, zu ermöglichen, dass die individuelle Blattregelung auch bei einem Sensorausfall in einem Rotorblatt aufrecht erhalten werden kann. Hierzu lassen sich gemäß dem vorliegenden Ansatz die weiterhin zur Verfügung stehenden Sensorsignale nutzen, um eine betreffende Sensorgröße in einem Trainingsmodus abzuschätzen und bereitzustellen, wobei die abgeschätzte Sensorgröße nachfolgend bei einem tatsächlich Ausfall der Sensorgröße als Eingangsgröße für den Regler zu verwenden ist.

Die Redundanzfunktion ist im Falle eines Ausfalls mindestens eines Sensors aktiv, so dass weiterhin die IPC Regelung aktiv ist.

Vorteilhafterweise kann eine solche Abschätzung im Rahmen eines reduzierten Luenberger Beobachters realisiert werden. Die Abschätzung der fehlenden Messgrößen erlaubt es die Sicherheit der IPC-Regelung auch bei einem Sensorausfall zu gewährleisten.

Die vorliegende Erfindung schafft ein Verfahren zur Ermittlung eines Schätzwerts für zumindest eine Messgröße einer Windkraftanlage, wobei die Messgröße insbesondere ein Biegemoment an einer Blattwurzel eines Rotorblattes der Windkraftanlage aus einer Rotorebene repräsentiert. Das Verfahren umfasst die folgenden Schritte:

- Einlesen der Messgröße(n) und eines Anstellwinkels für das Rotorblatt;
- Anpassen eines Modells, das einen Schätzwert der Messgröße auf der Basis einer Modellierungsvorschrift für einen Zusammenhang zwischen der Messgröße und dem Anstellwinkel nachbildet, wobei das Anpassen des Modells unter Verwendung der eingelesenen Messgröße und dem eingelesenen Anstellwinkel erfolgt; und
- Bereitstellen des Schätzwerts für die zumindest eine Messgröße unter Verwendung des Modells und des Anstellwinkels.

Weiterhin umfasst die Erfindung auch ein Verfahren zur Regelung eines Anstellwinkels eines Rotorblattes einer Windkraftanlage, wobei das Verfahren die folgenden Schritte aufweist: die Schritte des Verfahrens gemäß dem vorstehend genannten Verfahren; und einen Schritt des Verwendens des Schätzwertes für die Bestimmung eines individuellen Anstellwinkels für das Rotorblatt, wenn die Messgröße der Windkraftanlage als fehlerhaft erkannt wird und/oder als ausgefallen erkannt wird.

Die vorliegende Erfindung schafft ferner eine Vorrichtung zur Ermittlung eines Schätzwerts für zumindest eine Messgröße einer Windkraftanlage, wobei die Messgröße insbesondere ein Biegemoment an einer Blattwurzel eines Rotorblattes der Windkraftanlage aus einer Rotorebene repräsentiert, wobei die Vorrichtung die folgenden Merkmale umfasst: eine Einheit zum Einlesen der Messgröße und eines Anstellwinkels für das Rotorblatt; eine Einheit zum Anpassen eines Modells, das einen Schätzwert der Messgröße auf der Basis einer Modellierungsvorschrift für einen Zusammenhang zwischen der Messgröße und dem Anstellwinkel nachbildet, wobei das Anpassen des Modells unter Verwendung der eingelesenen Messgröße und dem eingelesenen Anstellwinkel erfolgt; und eine Einheit zum Bereitstellen des Schätzwerts für die zumindest eine Messgröße unter Verwendung des Modells.

Die Messgröße und der Schätzwert können als Zahlenwert, binärer Wert oder als direkte analoge Entsprechung der Messgröße wie eine entsprechende elektrische Spannung oder einen entsprechenden elektrischen Strom eingelesen werden. Die Messgröße kann ein Biegemoment an der Blattwurzel eines Rotorblatts einer Windkraftanlage repräsentieren. Der Anstellwinkel für das Rotorblatt kann tatsächlich am Rotorblatt gemessen werden oder es kann der Sollwert für einen Rotorblattverstellungs-Aktuator eingelesen werden. Das Modell kann eine Modellierungsvorschrift umfassen. Das Modell kann ein Zustandsraummodell einer Windkraftanlage sein. Das Modell kann auf linearisierten Bewegungsgleichungen der Windkraftanlage oder ähnlichem basieren. Es können auch nichtlineare Zusammenhänge in einem anderen Beobachtermodell abgebildet werden. Das Modell kann als Eingangsgröße die Information über den Anstellwinkel des Rotorblatts verwenden. Das Modell kann eine simulierte oder berechnete Momentenbelastung an der Blattwurzel des Rotorblatts ausgeben. Die simulierte Momentenbelastung kann die Messgröße im Fall eines Ausfalls des Sensors für die Messgröße substituieren. Durch eine Verwendung des Schätzwerts für nachfolgende Schritte lässt sich der Ausfall eines oder mehrerer Messwerte kompensieren und von den Messwerten abhängige Prozesse aufrechterhalten.

Die Abschätzung der Messgrößen ist eine kostengünstige Alternative zu einer komplett redundant ausgelegten Sensorik der Windkraftanlage. Zudem erhöht es die Verfügbarkeit der Windkraftantage, da ein Sensoraustausch z.B. in Schwachwindphasen erfolgen kann. Die gewünschte Lastreduktion beispielsweise am Turm oder der Gondel der Windkraftanlage ist weiterhin aktiv, so dass die IPC-Regelung weiterhin vorteilhaft genutzt werden kann.

Dabei wird ein allgemeiner Anstellwinkel für alle Rotorblätter speziell vom CPC Regler vorgegeben (eingelesen wird er speziell für die Regelung des Pitchaktuators, z.B. einem hydraulischen Aktuator mit Regelung der Kolbenposition für das betreffende Rotorblatt). Unter Annahme ausreichender Aktuatordynamik kann die Abweichung des Ist-Sollpitchwinkel hier vernachlässigt werden. Dies bedeutet, dass Momente eingelesen werden, aus denen vom IPC- und CPC Regler die tatsächlichen Anstellwinkel der Rotorblätter der Windkraftanlage berechnet werden. Ein weiterer Zusammenhang kann sich auf eine Beziehung zwischen einem Biegemoment und einer Blattauslenkung für das betreffende Rotorblatt beziehen. Der Anstellwinkel ergibt sich aus Drehung des Blattes um die Hochachse.

Der direkte Zusammenhang zwischen dem Pitchwinkel und der Messgröße, respektive dem Biegemoment ist im IPC Regler implementiert. Dieser liest das Biegemoment ein, wobei dann im IPC Regler hieraus der individuelle Anstellwinkel-Korrekturfaktor bestimmt wird, der mit dem gemeinsamen Anstellwinkel aus dem CPC-Regler zum tatsächlich verwendeten Anstellwinkel für das Rotorblatt verknüpft wird. Die Modellierungsvorschrift kann auch ein um einen Arbeitspunkt linearisiertes Zustandsraummodell der Windenergieanlage bezeichnen. Die Zustände können unter anderem die jeweiligen Anregungen der Blatteigenmoden darstellen. Aus der Zusammensetzung der Eigenmoden ergibt sich die Blattdurchbiegung. Aus dieser ergibt sich das Blattbiegemoment. Der Regler "füttert" somit zum einen die reale Anlage, zum anderen das Zustandsraummodell der Windenergieanlage.

Eine Anpassung des Modells des reduzierten Beobachters kann in Abhängigkeit der bekannten und unbekannten Messgrößen funktionieren. Beispielsweise werden alle Messgrößen als Modellinput verwendet, solange diese bekannt sind. Fällt jetzt ein Sensor aus, wird das Modell insofern angepasst, als dass jetzt eine Messgröße als unbekannt angenommen wird (hierfür gilt beispielsweise Dim(v) = 1, wobei v einen Vektor der unbekannten Messgrößen darstellt). Bei zwei ausgefallenen Sensoren würde das Modell mit Dim(v) = 2 aktiviert. Die bekannten Messgrößen werden beispielsweise für die Abschätzung der unbekannten Messgrößen im Modell verwendet, wie beispielsweise im Falle des reduzierten Luenberger Beobachters. Der Anstellwinkel kann dann vom Regler an das Modell (und die reale Anlage) gesendet werden.

Wichtig: Das Biegemoment ist nicht direkt eine Zustandsvariable, vielmehr ergibt es sich (vereinfacht) aus $M\_b=c\_Flap*x\_Flap$, mit $x\_Flap$ der Zustandsvariabeln, $c\_Flap$ der Biegesteifigkeit in Schlagrichtung (aus der Rotorebene). $x\_Flap$ würde die Durchbiegung des Rotorblatts beschreiben. Um zB die Information eines bekannten Biegemoments zu nutzen, würde also $x\_Flap=M\_b/c\_Flap$ gerechnet und diese Größe ist dann Teil des Vektors der bekannten Zustandsvariabeln.

Entsprechend einer weiteren Ausführungsform erfolgt im Schritt des Anpassens ein Reduzieren eines Unterschieds zwischen dem Schätzwert und der Messgröße durch Verändern des Modellparameters oder eines funktionalen Modell-Zusammenhangs. Die simulierte Momentenbelastung kann mit der tatsächlich eingelesenen Momentenbelastung verglichen werden. Aus dem Unterschied der beiden Werte kann eine Korrektur für das Modell oder die Modellierungsvorschrift abgeleitet werden, mit Hilfe der direkt die linearen oder nichtlineare Zusammenhänge verändert werden können oder Parameter in dem Modell verändert werden können, um das Model an die tatsächlichen Gegebenheiten der Windkraftanlage anzupassen.

Hierbei kann klar unterscheiden werden zwischen zwei Verfahren. Bei einem ersten Verfahren erfolgt eine: Modelladaption, respektive eine. Optimierung durch Parameteridentifikation oder -anpassung. Bei einem zweiten Verfahren erfolgt eine Beobachtung (Schätzung) unbekannter Zustände des Modells. Hierzu wird der reduzierter Luenberger Beobachter verwendet, der aber von einer festen Modellstruktur ausgeht. Neue funktionale Zusammenhänge zu berücksichtigen ist in diesem Fall schwierig. Der Unterschied des reduzierten Beobachters zum reinen Beobachter besteht in der Verwendung der Information bekannter Zustandsgrößen. Beide Verfahren könnten oder sollten verwendet werden. Eine Optimierung / Anpassung des Modells mit den bekannten Größen sollte allerdings nur so lange ausgeführt werden, bis eine der Messgrößen ausfällt (danach könnte sich das Modell wieder verschlechtern). Dann kann bei einem Sensorausfall eine Aktivierung des Beobachters und eine Deaktivierung der Modellparameteranpassung erfolgen.

Gemäß einer besonderen Ausführungsform der vorliegenden Erfindung werden die Schritte des Verfahrens unter Verwendung eines Luenberger-Beobachter-Modells, insbesondere eines reduzierten Luenberger-Beobachters ausgeführt. Ein Luenberger-Beobachter bzw. ein entsprechendes Modell bezieht sein Ausgangssignal auf ein Eingangssignal, welches er durch sein Modell nachbildet. Aus einem Unterschied der beiden Signale lässt sich ein Korrekturfaktor oder ein Korrektur-Funktionszusammenhang für das Modell bestimmen, so dass das Modell unter Verwendung der Information über den Fehler zwischen Eingangssignal und mittels dem Modell nachgebildeten Signal korrigiert werden kann. Durch die Rückführung der Information über den Fehler, beispielsweise in der Form einer Differenz zwischen dem Eingangssignal und dem nachgebildeten Signal in das Modell kann das dem Beobachter zugrundeliegende Modell optimiert werden und der Fehler minimiert werden.

In einer weiteren Ausführungsform der vorliegenden Erfindung wird im Schritt des Einlesens zumindest eine weitere Messgröße der Windkraftanlage und ein Anstellwinkel für ein weiteres Rotorblatt eingelesen, wobei die weitere Messgröße insbesondere ein Biegemoment an einer Blattwurzel des weiteren Rotorblattes der Windkraftanlage aus einer Rotorebene repräsentiert, wobei im Schritt des Anpassens das Modell auf der Basis der weiteren Messgröße für das weitere Rotorblatt angepasst wird, wobei das Modell ausgebildet ist, um einen Schätzwert für die weitere Messgröße auf der Basis eines Zusammenhangs zwischen der weiteren Messgröße und dem Anstellwinkel oder der weiteren Blattauslenkung für das weitere Rotorblatt nachzubilden und wobei im Schritt des Bereitstellens ein Schätzwert für die weitere Messgröße für das weitere Rotorblatt bereitgestellt wird. Durch die Optimierung des Modells basierend auf mehreren Rotorblättern lässt sich eine allgemeine gültige Modellvariante finden. Eine derartige Ausführungsform der vorliegenden Erfindung bietet den Vorteil, dass gewährleistet werden kann dass die IPC-Regelung bei dem Ausfall einer Messgröße noch aktiv arbeitet. Vielmehr kann sichergestellt werden, dass auch weitere Messgrößen wie beispielsweise die Biegemomentmesswerte von einem oder den beiden anderen Rotorflügeln durch das Modell abgeschätzt werden. Diese Abschätzung kann auch auf der Basis von mehreren einzelnen Modellen erfolgen, die eine Abschätzung der Messgröße für jeweils ein Rotorblatt modellieren. Das Modell würde in diesem Fall mehrere Untermodelle enthalten, beispielsweise je eines für jede nachzubildende Messgröße eines Rotorblattes. Auf diese Weise ist sichergestellt, dass die IPC-Regelung auch bei einem Ausfall von mehr als einem Sensor noch zuverlässig arbeitet.

Auch ist es günstig, wenn im Schritt des Verwendens die Bestimmung des individuellen Anstellwinkels auf der Basis der Messgröße erfolgt, wenn die Messgröße der Windkraftanlage als fehlerfrei erkannt wird und/oder als vorliegend erkannt wird. Die gemessenen Werte entsprechen den tatsächlichen Zuständen am Rotorblatt. Ungenauigkeiten durch angenäherte oder abgeschätzte Messgrößen lassen sich so vermeiden.

Ferner kann auch ein Ermitteln eines gemeinsamen Anstellwinkels erfolgen, der für die Bestimmung des Anstellwinkels der Windkraftanlage verwendet wird, wobei die Bestimmung des Anstellwinkels für jedes einzelne der Rotorblätter auf der Basis des gemeinsamen Anstellwinkels und des individuellen Anstellwinkels erfolgt.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und der zur Durchführung des Verfahrens nach einem der vorstehend beschriebenen Ausführungsformen verwendet wird, wenn das Programm auf einem Steuergerät oder einer Vorrichtung ausgeführt wird.

Die Erfindung wird nachstehend anhand der beigefügten Zeichnungen beispielhaft näher erläutert. Es zeigen:

Fig. 1    ein Blockschaltbild eines Ausführungsbeispiels einer Vorrichtung zum Ermitteln eines Schätzwerts gemäß dem hier vorgestellten Ansatz in einer Lernphase;

Fig. 2    ein Blockschaltbild eines Ausführungsbeispiels einer Vorrichtung zum Ermitteln eines Schätzwerts gemäß dem hier vorgestellten Ansatz in einer Phase, in der ein fehlerhaftes oder fehlendes Signal für eine Messgröße der Windkraftanlage aufgetreten ist; und

Fig. 3    ein Ablaufdiagramm eines Ausführungsbeispiels eines Verfahrens zum Ermitteln eines Schätzwerts gemäß dem hier vorgestellten Ansatz.

Gleiche oder ähnlich wirkende Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal / den zweiten Schritt und gemäß einer weiteren Ausführungsform entweder nur das erste Merkmal / den ersten Schritt oder nur das zweite Merkmal / den zweiten Schritt aufweist.

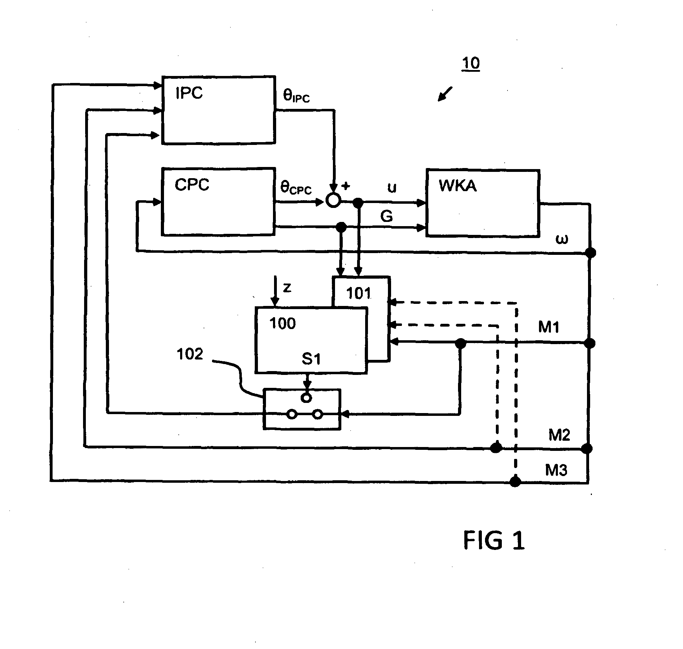

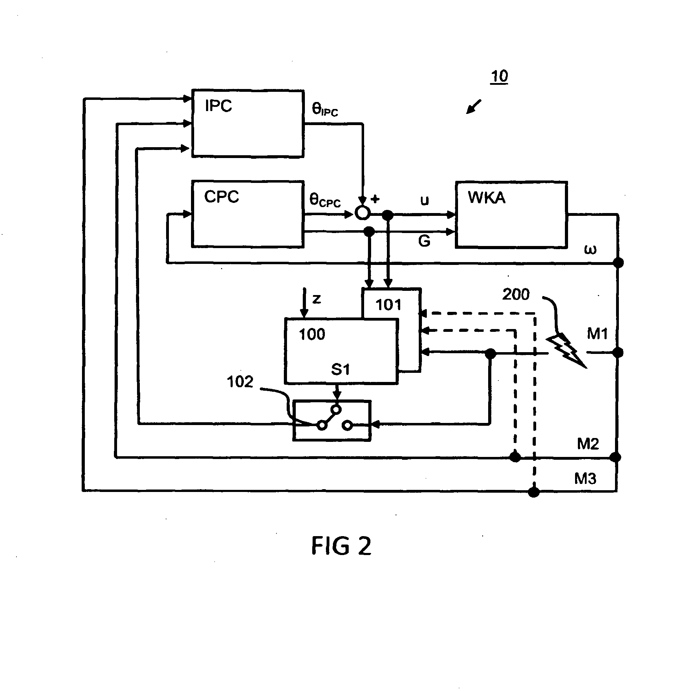

Fig. 1 und 2 zeigen je ein Blockschaltbild eines Ausführungsbeispiels einer Vorrichtung zum Ermitteln eines Schätzwerts gemäß dem hier vorgestellten Ansatz, um eine Realisierung eines Messgrößen-Schätzverfahrens für die individuelle Blattregelung einer Windkraftanlage WKA zu verdeutlichen. Eine konventionelle Steuerung für eine Windkraftanlage WKA, bestehend aus einer Anstellwinkel-Regelung CPC für einen gemeinsamen Anstellwinkel für alle Rotorblätter, gibt basierend auf der Drehgeschwindigkeit $\omega$ eines Rotors der Windkraftanlage WKA und anderen Leistungsparametern der Windkraftanlage WKA einen Anstellwinkel $\theta_{CPC}$ für alle Rotorblätter der Windkraftanlage WKA aus. Weiterhin wird vom dem CPC-Regler das Generatormoment an die Windkraftanlage weitergeleitet, um eine entsprechende Einstellung der Windkraftanlage zu erreichen. Um ganz genau zu sein umfasst der in den Figuren darstellte Block CPC die Betriebsführung konventioneller Anlagen einen Pitch- und einen Generatorregler. Vorliegend wird daher auch unter dem CPC-Regler ein Regler verstanden, der die Betriebsführung der Windkraftanlage repräsentiert. Um Momente in Gier- und Nickrichtung zu minimieren greift zusätzlich eine individuelle Anstellwinkelregelung IPC in die Steuerung ein. Die individuelle Anstellwinkelregelung IPC stellt einen Anstellwinkel Korrekturwinkel $\theta_{IPC}$ für jedes einzelne Rotorblatt der Windkraftanlage WKA bereit. Der kollektive Anstellwinkel $\theta_{CPC}$ und der individuelle Anstellwinkel Korrekturwinkel $\theta_{IPC}$ werden miteinander verknüpft, beispielsweise additiv verknüpft. Hierdurch wird ein Anstellwinkel u als Sollwert für eine Blattverstellung je eines Rotorblatts der Windkraftanlage WKA gebildet und der Windkraftanlage WKA zugeführt.

Fig. 1 zeigt eine Schaltung der dargestellten Komponenten für eine Lernphase. In der Lernphase erhält die individuelle Anstellwinkelregelung IPC Signale M1, M2, M3 betreffend die an jedem der drei Rotorblätter der Windkraftanlage wirkenden Momente. Parallel dazu arbeitet ein Beobachter 100. Der Beobachter 100 erhält über eine Schnittstelle oder Einheit zum Einlesen 101 als Steuergröße den Anstellwinkel u für ein Rotorblatt der Windkraftanlage WKA und das Generatormoment G. Im vorliegenden Fall wäre dies der Anstellwinkel für das Rotorblatt, dessen Sensor die Messgröße, z.B. das Biegemoment, M1 ausgibt. Zusätzlich erhält der Beobachter 100 beispielsweise auch noch weitere Messgrößen wie die Biegemomente M2 und M3 an der Blattwurzel der anderen Rotorblätter sowie eine Hilfsvariable z. Diese Hilfsvariable ermöglicht ihm eine gewisse Flexibilität bei der Anpassung eines Beobachter-Modells, das nachfolgend auch der Einfachheit halber als Modell bezeichnet wird. Basierend auf einem Modell der Windkraftanlage WKA gibt der Beobachter 100 ein Signal S1 aus, das dem Signal M1 über die wirkenden Momente an dem Rotorblatt der Windkraftanlage entspricht. Da das Signal S1 des Beobachters 100 in der Lernphase nicht angewandt wird, verhindert ein Schalter 102 ein Einspeisen des Signals S1 in die Eingänge der individuellen Anstellwinkelregelung IPC. Um das Modell des Beobachters 100 kontinuierlich zu verbessern, erhält der Beobachter 100 das tatsächliche Signal M1 über die wirkenden Momente an dem Rotorblatt, wenn die Messgröße M1 ein Moment an dem Rotorblatt darstellt. Das Ausgangssignal S1 des Beobachters 100 und das tatsächliche Signal M1 des Rotorblatts werden kontinuierlich miteinander verglichen und aus dem Unterschied ein Korrekturparameter oder ein Korrektur-Funktionalzusammenhang gebildet, um das Modell im Beobachter 100 kontinuierlich zu verbessern.

Fig. 2 zeigt eine Schaltung der dargestellten Komponenten aus dem Blockschaltbild gemäß Fig. 1 für eine Phase, in der ein fehlerhaftes oder fehlendes Signal für eine Messgröße der Windkraftanlage aufgetreten ist. Das Signal M1 über die wirkenden Momente bzw. das Biegemoment an dem Rotorblatt der Windkraftanlage WKA ist gestört, was durch den Pfeil 200 dargestellt wird. Diese Störung kann durch einen Ausfall des Sensors für die Messgröße M1, einen Leitungsbruch der Leitungen zum oder vom Sensor für die Messgröße M1 oder einen anderen Defekt verursacht sein. Der individuellen Anstellwinkelregelung IPC fehlt nun eines der Eingangssignale M1, M2, M3 um den Anstellwinkel Korrekturwinkel $\theta_{IPC}$ wie gewünscht bereitstellen zu können. Wird nun ein solcher Fall erkannt, dass das Signal des Sensors für die Messgröße M1 gestört (d.h. fehlerbehaftet) ist oder ganz fehlt, wird ein Schalter 102 betätigt, und das Ausgangssignal S1 des Beobachters 100 ersetzt das gestörte Signal M1 über die wirkenden Momente an dem Rotorblatt. Dieser Schalter 102 kann auch automatisch gesteuert werden, wenn das Signal des Sensors für die Messgröße M1 als fehlerhaft oder fehlend erkannt wird. Dadurch kann die individuelle Anstellwinkelregelung IPC erneut den Anstellwinkel-

Korrekturwinkel $\theta_{IPC}$ wie gewünscht bereitstellen. Der Beobachter 100 erhält als Steuergröße weiterhin den Anstellwinkel u für ein Rotorblatt der Windkraftanlage WKA und die Hilfsvariable z. Da das Signal M1 über die wirkenden Momente an dem Rotorblatt gestört ist, kann der Beobachter 100 jedoch keine weitere Optimierung des Modells durchführen. Das bis zum Zeitpunkt der Störung 200 optimierte Modell im Beobachter 100 ersetzt nun die tatsächliche Messung am Rotorblatt. Mit anderen Worten ausgedrückt wird durch das trainierte Modell unter Verwendung des Anstellwinkels die zu erwartende Messgröße für M1 nachgebildet, die aller Wahrscheinlichkeit nach vom Sensor geliefert würde, wenn der Sensor eine fehlerfreie Messgröße liefern würde. Die Anstellwinkel-Regelung CPC für den gemeinsamen Anstellwinkel $\theta_{CPC}$ gibt weiterhin den kollektiven Anstellwinkel $\theta_{CPC}$ für alle Rotorblätter der Windkraftanlage WKA, basierend auf der Drehgeschwindigkeit $\omega$ des Rotors der Windkraftanlage WKA und anderen Leistungsparametern der Windkraftanlage WKA, aus.

Das in den Figuren 1 und 2 dargestellte Blockschaltbild zeigt eine Anordnung von Komponenten für eine Schätzung der Messgröße M1 und die Verwendung der geschätzten Messgröße M1 für die IPC-Regelung in demjenigen Fall, dass die gemessene Messgröße nicht fehlerfrei vorliegt. Es ist jedoch auch offensichtlich, dass bei einem hier aus Gründen der Einfachheit nicht dargestellten Ausführungsbeispiel auch eine zur Schätzung der Messgröße M1 durch Verwendung eines entsprechend trainierten Modells analoge Schätzung für die Messgröße M2 und/oder die Messgröße M3 verwendet werden kann. Auf diese Weise wird sichergestellt, dass in der IPC-Regelung nicht nur eine Mess- oder Sensorgröße gegen einen Ausfall geschützt ist, sondern dass die IPC-Regelung im schlechtesten Fall die geschätzten Messgrößen für M1, M2 und M3 verwenden kann, wenn alle Sensoren für die Messgrößen M1, M2 und M3 ausgefallen sind oder gestörte Messsignale liefern.

Generell kann man den Beobachter als reinen Beobachter ausführen. Hierzu kann von einer Schätzung aller drei Biegemomente auf Basis des vorher identifizierten Modells ausgegangen werden oder ein reduzierter Beobachter eingesetzt werden. Dieser Einsatz des reduzierten Beobachters hat den Vorteil, dass auch Informationen bekannter Zustandsvariablen verwendet werden können. Beide könnten auf dem vorher optimierten Lernmodell basieren.

Für die Implementierung der Messgrößenabschätzung ist es daher von Vorteil, ein Zustandsraummodell in dem Beobachter beispielsweise basierend auf den linearisierten Bewegungsgleichungen der Windkraftanlage zu erstellen. Es bietet sich an für verschiedene Betriebspunkte beziehungsweise unterschiedlichen Belastungsstärken jeweils ein linearisiertes Modell zu erstellen und dann über die Betriebsführung das jeweils relevante Modell zu aktivieren. Diese einzelnen Modelle können dann beim Schritt des Anpassens gegeneinander ausgetauscht werden. Die Biegemomentbelastungen vorzugsweise jeweils in Schlag- und Schwenkrichtung werden bei einem Sensorausfall eines Rotorblatts in bekannte und unbekannte Zustandsvariablen eingeteilt. Die Zustandsraumdarstellung wird entsprechend den bekannten und unbekannten Größen gemäß der folgenden Gleichung dargestellt.

$$\begin{bmatrix} \dot{y} \\ \dot{v} \end{bmatrix} = \begin{bmatrix} A_{11} & A_{12} \\ A_{21} & A_{22} \end{bmatrix} \begin{bmatrix} y \\ v \end{bmatrix} + \begin{bmatrix} B_1 \\ B_2 \end{bmatrix} u$$

In der vorstehenden Gleichung entspricht die Variable y den bekannten Messgrößen und die Variable v den unbekannten Messgrößen. Nach Umformung ergibt sich die folgende Gleichung für die abzuschätzenden Größen.

$$\dot{z} = (A_{22} - KA_{12})z + (B_2 - KB_1)u + [(A_{22} - KA_{12})K + (A_{21} - KA_{11})]y$$

$$\hat{v} = z + Ky$$

In den vorstehenden Gleichungen stellen die Größe z eine Hilfsvariable, "v der Schätzwert der fehlenden (oder fehlerhaften) Sensorgröße oder Sensorgrößen dar und über die Koeffizienten von K werden die Eigenwerte des Beobachters bzw. dessen Beobachtermatrix festgelegt.

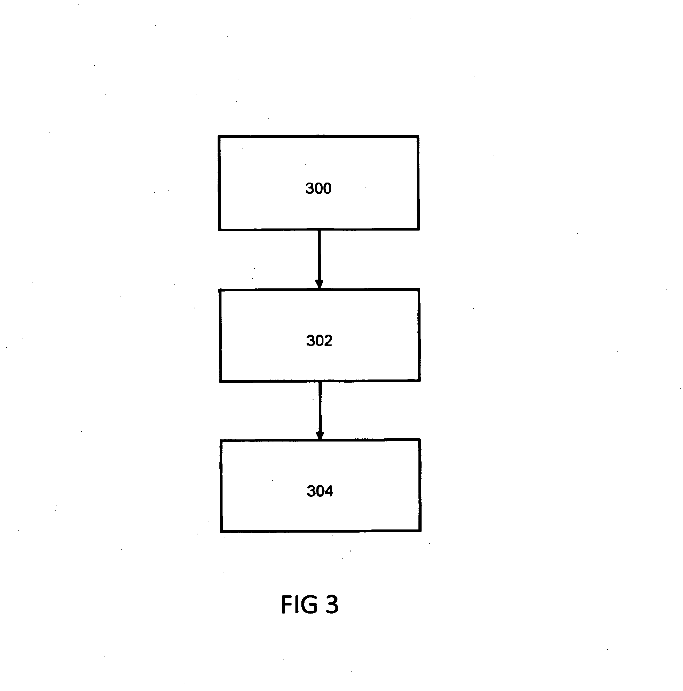

Fig. 3 zeigt ein Ablaufdiagramm eines Ausführungsbeispiels eines Verfahrens zum Ermitteln eines Schätzwerts gemäß dem hier vorgestellten Ansatz. Das Verfahren umfasst einen Schritt des Einlesens 300, einen Schritt des Anpassens 302 und einen Schritt des Bereitstellens 304. Im Schritt des Einlesens 300 wird eine Messgröße eingelesen, die insbesondere ein Biegemoment an einer Blattwurzel eines Rotorblatts einer Windkraftanlage repräsentiert. Zusätzlich wird ein Signal eingelesen, das einen Anstellwinkel des Rotorblatts repräsentiert. Im Schritt des Anpassens 302 wird ein Modell angepasst. Das Modell gibt auf Basis einer Modellierungsvorschrift einen Schätzwert für die Messgröße aus. Die Modellierungsvorschrift bildet einen Zusammenhang zwischen der Messgröße und dem Anstellwinkel ab. Zum Anpassen wird der Schätzwert aus dem Modell mit der gemessenen Messgröße verglichen, und beispielsweise bildet die Differenz zwischen dem Schätzwert für die Messgröße und der eingelesenen Messgröße die Basis für die Anpassung des Modells. Diese Differenz sollte dann günstigerweise minimiert werden. Die Anpassung des Modells kann durch Änderung einer oder mehrerer der Variablen des Modells erfolgen, aber auch durch Veränderungen der Modellierungsvorschrift.

Im Schritt des Bereitstellens 304 wird der Schätzwert des Modells für nachfolgende Verfahren zur Verfügung gestellt.

Die gezeigten Ausführungsbeispiele sind nur beispielhaft gewählt und können miteinander kombiniert werden.

Bezugszeichenliste

| | |
|---|---|
| 10 | Vorrichtung zum Ermittlung eines Schätzwerts für zumindest eine Messgröße einer Windkraftanlage |
| 100 | Beobachter |
| 101 | Schnittstelle, Einheit zum Einlesen |
| 102 | Schalter, Einheit zum Bereitstellen |
| 200 | Defekt |
| 300 | Schritt des Einlesens |
| 302 | Schritt des Anpassens |
| 304 | Schritt des Bereitstellens |
| WKA | Windkraftanlage |
| CPC | gemeinsame Anstellwinkelregelung |
| IPC | individuelle Anstellwinkelregelung |
| U | Soll-Anstellwinkel-Signal |
| G | Generatormoment |
| $\omega$ | Drehzahl |
| M1, M2, M3 | Rotorblattbiegemoment 1, 2, 3 |
| Z | Hilfsvariable |
| $\theta_{CPC}$ | gemeinsamer Anstellwinkel |
| $\theta_{IPC}$ | individueller Anstellwinkel |

**Patentansprüche**

1. Verfahren zur Ermittlung eines Schätzwerts (S1) für zumindest eine Messgröße, (M1, M2, M3) einer Windkraftanlage (WKA), wobei die Messgröße insbesondere ein Biegemoment an einer Blattwurzel eines Rotorblattes der Windkraftanlage aus einer Rotorebene repräsentiert, wobei das Verfahren die folgenden Schritte umfasst:

   - Einlesen (300) der Messgröße und eines Anstellwinkels (u) für das Rotorblatt;
   - Anpassen (302) eines Modells, das einen Schätzwert der Messgröße auf der Basis einer Modellierungsvorschrift für einen Zusammenhang zwischen der Messgröße und dem Anstellwinkel nachbildet, wobei das Anpassen des Modells unter Verwendung der eingelesenen Messgröße und dem eingelesenen Anstellwinkel erfolgt; und
   - Bereitstellen (304) des Schätzwerts für die zumindest eine Messgröße unter Verwendung des Modells.

2. Verfahren gemäß Anspruch 1, **dadurch gekennzeichnet, dass** im Schritt des Anpassens (302) ein Reduzieren eines Unterschieds zwischen dem Schätzwert (S1) und der Messgröße (M1, M2, M3) durch Verändern des Modellparameters oder eines funktionalen Modell-Zusammenhangs erfolgt.

3. Verfahren gemäß einem der vorangegangenen Ansprüche, **dadurch gekennzeichnet, dass** die Schritte des Verfahrens unter Verwendung eines Luenberger-Beobachter-Modells, insbesondere eines reduzierten Luenberger-Beobachter-Modells ausgeführt werden.

4. Verfahren gemäß einem der vorhergehenden Ansprüche, **dadurch gekennzeichnet, dass** im Schritt des Einlesens (300) zumindest eine weitere Messgröße (M1, M2, M3) der Windkraftanlage (WKA) und ein Anstellwinkel (u) für ein weiteres Rotorblatt eingelesen wird, wobei die weitere Messgröße insbesondere ein Biegemoment an einer Blattwurzel des weiteren Rotorblattes der Windkraftanlage aus einer Rotorebene repräsentiert, wobei im Schritt des Anpassens (302) das Modell auf der Basis der weiteren Messgröße für das weitere Rotorblatt angepasst wird, wobei das Modell ausgebildet ist, um einen Schätzwert (S1) für die weitere Messgröße auf der Basis eines Zusammenhangs zwischen der weiteren Messgröße und dem Anstellwinkel für das weitere Rotorblatt nachzubilden und wobei im Schritt des Bereitstellens (304) ein Schätzwert für die weitere Messgröße für das weitere Rotorblatt bereitgestellt wird.

5. Verfahren zur Regelung eines Anstellwinkels (u) eines Rotorblattes einer Windkraftanlage (WKA), wobei das Verfahren die folgenden Schritte aufweist:

- die Schritte des Verfahrens gemäß einem der Ansprüche 1 bis 4; und
- Verwenden des Schätzwertes für die Bestimmung eines individuellen Anstellwinkels ($\theta$IPC) für das Rotorblatt, wenn die Messgröße (M1, M2, M3) der Windkraftanlage als fehlerhaft erkannt wird und/oder als ausgefallen erkannt wird.

6. Verfahren gemäß Anspruch 5, **dadurch gekennzeichnet, dass** im Schritt des Verwendens die Bestimmung des individuellen Anstellwinkels ($\theta_{IPC}$) auf der Basis der Messgröße (M1, M2, M3) erfolgt, wenn die Messgröße der Windkraftanlage (WKA) als fehlerfrei erkannt wird und/oder als vorliegend erkannt wird.

7. Verfahren gemäß einem der Ansprüche 5 oder 6, **dadurch gekennzeichnet, dass** ferner ein Ermitteln eines gemeinsamen Anstellwinkels ($\theta_{CPC}$) erfolgt, der für die Bestimmung des Anstellwinkels (u) der Windkraftanlage (WKA) verwendet wird, wobei die Bestimmung des Anstellwinkels für jedes einzelne der Rotorblätter auf der Basis des gemeinsamen Anstellwinkels und des individuellen Anstellwinkels erfolgt.

8. Vorrichtung (10) zur Ermittlung eines Schätzwerts (S1) für zumindest eine Messgröße (M1, M2, M3) einer Windkraftanlage (WKA), wobei die Messgröße insbesondere ein Biegemoment an einer Blattwurzel eines Rotorblattes der Windkraftanlage aus einer Rotorebene repräsentiert, wobei die Vorrichtung die folgenden Merkmale umfasst:

- eine Einheit (101) zum Einlesen der Messgröße und eines Anstellwinkels (u) für das Rotorblatt;
- eine Einheit (100) zum Anpassen eines Modells, das einen Schätzwert der Messgröße auf der Basis einer Modellierungsvorschrift für einen Zusammenhang zwischen der Messgröße und dem Anstellwinkel nachbildet, wobei das Anpassen des Modells unter Verwendung der eingelesenen Messgröße und des eingelesenen Anstellwinkel erfolgt; und
- eine Einheit (102) zum Bereitstellen des Schätzwerts für die zumindest eine Messgröße unter Verwendung des Modells.

9. Computerprogrammprodukt mit Programmcode zur Durchführung eines Verfahrens nach einem der Ansprüche 1 bis 7, wenn das Programm auf einem Steuergerät oder einer Vorrichtung (10) ausgeführt wird.

**Claims**

1. Method for ascertaining an estimate (S1) for at least one measured variable (M1, M2, M3) in a wind power installation (WKA), wherein the measured variable represents particularly a bending torque on a blade root of a rotor blade in the wind power installation from a rotor plane, wherein the method comprises the following steps:

- the measured variable and a pitch angle (u) for the rotor blade are read in (300);
- a model which simulates an estimate of the measured variable on the basis of a modeling specification for a relationship between the measured variable and the pitch angle is adapted (302), with the model being adapted by using the read-in measured variable and the read-in pitch angle; and
- the estimate for the at least one measured variable is provided (304) by using the model.

2. Method according to Claim 1, **characterized in that** the step of adaptation (302) involves a reduction in a difference between the estimate (S1) and the measured variable (M1, M2, M3) by virtue of alteration of the model parameter or of a functional model relationship.

3. Method according to either of the preceding claims, **characterized in that** the steps of the method are executed by using a Luenberger observer model, particularly a reduced Luenberger observer model.

4. Method according to one of the preceding claims, **characterized in that** the step of reading in (300) involves at least one further measured variable (M1, M2, M3) in the wind power installation (WKA) and a pitch angle (u) for a further rotor blade being read in, wherein the further measured variable represents particularly a bending torque on a blade root of the further rotor blade in the wind power installation from a rotor plane, wherein the step of adaptation (302) involves the model being adapted on the basis of the further measured variable for the further rotor blade, wherein the model is designed to simulate an estimate (S1) for the further measured variable on the basis of a relationship between the further measured variable and the pitch angle for the further rotor blade and wherein the step of provision (304) involves an estimate for the further measured variable for the further rotor blade being provided.

5. Method for controlling a pitch angle (u) for a rotor blade in a wind power installation (WKA), wherein the method has the following steps:

- the steps of the method according to one of Claims 1 to 4; and
- use of the estimate to determine an individual pitch angle ($\theta$IPC) for the rotor blade when the measured variable (M1, M2, M3) in the wind power installation is recognized as erroneous and/or is recognized as unusual.

6. Method according to Claim 5, **characterized in that** the step of use involves the individual pitch angle ($\theta_{IPC}$) being determined on the basis of the measured variable (M1, M2, M3) when the measured variable in the wind power installation (WKA) is recognized as free of error and/or is recognized as available.

7. Method according to either of Claims 5 and 6, **characterized in that** a common pitch angle ($\theta_{CPC}$) is also ascertained which is used for determining the pitch angle (u) of the wind power installation (WKA), wherein the pitch angle is determined for every single one of the rotor blades on the basis of the common pitch angle and the individual pitch angle.

8. Apparatus (10) for ascertaining an estimate (S1) for at least one measured variable (M1, M2, M3) in a wind power installation (WKA), wherein the measured variable represents particularly a bending torque on a blade root of a rotor blade in the wind power installation from a rotor plane, wherein the apparatus comprises the following features:

- a unit (101) for reading in the measured variable and a pitch angle (u) for the rotor blade;
- a unit (100) for adapting a model which simulates an estimate of the measured variable on the basis of a modeling specification for a relationship between the measured variable and the pitch angle, with the model being adapted by using the read-in measured variable and the read-in pitch angle; and
- a unit (102) for providing the estimate for the at least one measured variable by using the model.

9. Computer program product having program code for carrying out the method according to one of Claims 1 to 7 when the program is executed on a controller or an apparatus (10).

## Revendications

1. Procédé de détermination d'une valeur estimée (S1) d'au moins une grandeur de mesure (M1, M2, M3) d'une éolienne (WKA), la grandeur de mesure représentant en particulier le couple de flexion hors du plan du rotor à la racine d'une pale du rotor de l'éolienne, le procédé comportant les étapes suivantes :

lecture (300) de la grandeur de mesure et d'un angle d'attaque (u) de la pale du rotor,
adaptation (302) d'un modèle qui forme une valeur estimée de la grandeur de mesure sur la base d'une prescription de modélisation de la relation entre la grandeur de mesure et l'angle d'attaque, l'adaptation du modèle ayant lieu en recourant à la grandeur de mesure lue et à l'angle d'attaque lu et
fourniture (304) de la valeur estimée de la ou des grandeurs de mesure en recourant au modèle.

2. Procédé selon la revendication 1, **caractérisé en ce qu'**à l'étape d'adaptation (302) a lieu une réduction de la différence entre la valeur estimée (S1) et la grandeur de mesure (M1, M2, M3) par modification du paramètre du modèle ou d'une relation fonctionnelle du modèle.

3. Procédé selon l'une des revendications précédentes, **caractérisé en ce que** les étapes du procédé sont exécutées en recourant à un modèle d'observateur de Luenberger et en particulier à un modèle d'observateur de Luenberger réduit.

4. Procédé selon l'une des revendications précédentes, **caractérisé en ce qu'**à l'étape de lecture (300), au moins une autre grandeur de mesure (M1, M2, M3) de l'éolienne (WKA) et un angle d'attaque (u) d'une autre pale du rotor sont lus, l'autre grandeur de mesure représentant en particulier le couple de flexion hors du plan du rotor à la racine de l'autre pale du rotor de l'éolienne, le modèle étant adapté à l'étape d'adaptation (302) sur la base de l'autre grandeur de mesure de l'autre pale du rotor, le modèle étant configuré de manière à former une valeur estimée (S1) de l'autre grandeur de mesure sur la base d'une relation entre l'autre grandeur de mesure et l'angle d'attaque de l'autre pale du rotor, une valeur estimée de l'autre grandeur de mesure de l'autre pale du rotor étant délivrée à l'étape de fourniture (304).

5. Procédé de régulation de l'angle d'attaque (u) d'une pale de rotor d'une éolienne (WKA), le procédé comportant les étapes suivantes :

les étapes du procédé selon l'une des revendications 1 à 4 et
l'utilisation de la valeur estimée pour déterminer un angle d'attaque individuel (θIPC) de la pale de rotor lorsqu'il est détecté que les grandeurs de mesure (M1, M2, M3) de l'éolienne sont erronées et/ou ont disparu.

6. Procédé selon la revendication 5, **caractérisé en ce qu'**à l'étape d'utilisation, la détermination de l'angle d'attaque individuel ($\theta_{IPC}$) s'effectue sur la base de la grandeur de mesure (M1, M2, M3) lorsqu'il est détecté que la grandeur de mesure de l'éolienne (WKA) est erronée et/ou présente.

7. Procédé selon l'une des revendications 5 ou 6, **caractérisé en ce qu'**en outre un angle d'attaque commun ($\theta_{CPC}$) est déterminé et est utilisé pour déterminer l'angle d'attaque (u) de l'éolienne (WKA), la détermination de l'angle d'attaque pour chaque pale du rotor s'effectuant sur la base de l'angle d'attaque commun et de l'angle d'attaque individuel.

8. Dispositif (10) de détermination d'une valeur estimée (S1) d'au moins une grandeur de mesure (M1, M2, M3) d'une éolienne (WKA), la grandeur de mesure représentant en particulier le couple de flexion hors du plan du rotor à la racine d'une pale du rotor de l'éolienne, le dispositif présentant les caractéristiques suivantes :

une unité (101) qui lit la grandeur de mesure et un angle d'attaque (u) de la pale du rotor,
une unité (100) qui adapte un modèle qui forme une valeur estimée de la grandeur de mesure sur la base d'une prescription de modélisation d'une relation entre la grandeur de mesure et l'angle d'attaque, l'adaptation du modèle ayant lieu en recourant à la grandeur de mesure lue et à l'angle d'attaque lu et
une unité (102) qui délivre la valeur estimée de la ou des grandeurs de mesure en recourant au modèle.

9. Produit de programme informatique doté de codes de programme permettant la mise en oeuvre d'un procédé selon l'une des revendications 1 à 7 lorsque le programme est exécuté sur un appareil de commande ou un dispositif (10).

FIG 1

**FIG 2**

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008041066 A1
- WO 2009026930 A2
- EP 1659287 A2
- WO 2008119651 A2